# EUROPÄISCHE PATENTSCHRIFT

(11) **EP 3 233 321 B1**
(45) Veröffentlichungstag und Bekanntmachung des Hinweises auf die Patenterteilung: **17.02.2021**
(21) Anmeldenummer: 15804424.8
(22) Anmeldetag: 02.12.2015
(51) Int. Cl.: B21D 1/00

(54) **PRESSWERKZEUGTEIL UND VORRICHTUNG ZUM BESEITIGEN VON PLANHEITSFEHLERN AN FLÄCHIGEN HALBZEUGEN**
PRESSING TOOL PART AND DEVICE FOR ELIMINATING FLATNESS DEFECTS ON PLANAR SEMIFINISHED PRODUCTS
PIÈCE D'OUTIL DE MOULAGE PAR COMPRESSION ET DISPOSITIF D'ÉLIMINATION DES DÉFAUTS DE PLANÉITÉ SUR DES DEMI-PRODUITS PLATS

(30) Priorität: 19.12.2014 DE 102014226519
(43) Veröffentlichungstag der Anmeldung: 25.10.2017
(73) Patentinhaber: SMS group GmbH, 40237 Düsseldorf (DE)
(72) Erfinder: DEHMEL, Roman, 41515 Grevenbroich (DE); WERNER, Frank, 42579 Heiligenhaus (DE)
(74) Vertreter: Klüppel, Walter
(86) Internationale Anmeldenummer: PCT/EP2015/078276
(87) Internationale Veröffentlichungsnummer: WO 2016/096411

(56) Entgegenhaltungen:
- WO-A1-2013/135688
- DE-C1- 4 235 971
- FR-A1- 2 782 942
- GB-A- 1 021 794
- US-A1- 2010 229 622
- US-B1- 6 205 830

## Beschreibung

Die Erfindung betrifft ein Presswerkzeugteil zum Beseitigen eines Planheitsfehlers an einem flächigen Halbzeug mit einer dem flächigen Halbzeug zugewandten Pressfläche.

Die Erfindung betrifft darüber hinaus eine Vorrichtung zum Beseitigen von Planheitsfehlern an flächigen Halbzeugen, insbesondere eine Richtpresse, mit einem Maschinengestell, an welchem ein Pressstößel in Pressrichtung gegenüber einem Presstisch verfahrbar gelagert ist, und mit einem Presswerkzeug umfassend wenigstens ein eine Pressfläche aufweisendes Presswerkzeugteil, mittels welchem Planheitsfehler an dem flächigen Halbzeug beseitigbar sind.

Gattungsgemäße Richtpressen sind aus dem Stand der Technik bereits bekannt, um etwa Planheitsfehler an flächigen Halbzeugen, etwa an gewalzten Halbzeugen, wie beispielsweise an Blechen, zu beseitigen, so dass diese flächigen Halbzeuge ohne eine negative Beeinflussung der mechanischen Eigenschaften, der Oberfläche oder dergleichen an einen Kunden ausgeliefert werden können.

Solche Planheitsfehler entstehen beispielswiese im Zuge von Walzprozessen, Wärmebehandlungen oder ähnlichem und sie können sich insbesondere als Beulen, Senken, Querbögen, Mitten- und Randwellen, Skip-ups oder dergleichen an dem flächigen Halbzeug auswirken.

Insbesondere Richtpressen zum Richten von Dickblechen umfassen hierzu Presswerkzeuge aus beispielsweise zwei zueinander verlagerbaren Presswerkzeugteilen, von welchen zumindest eines in vertikaler Richtung, also hochwärts bzw. runterwärts, elektromechanisch bzw. hydraulisch in einem Maschinengestell der Richtpresse verfahren werden kann.

Insofern wird der jeweilige an einem flächigen Halbzeug vorhandene Planheitsfehler mittels eines vertikalen Pressvorgangs eines entsprechend ausgestalten Presswerkzeugs beseitigt oder zumindest in einem ausreichenden Maß reduziert.

Die dafür erforderlichen recht hohen Presskräfte können jedoch speziell in den Randbereichen eines derartigen Presswerkzeugs zu plastischen Verformungen des flächigen Halbzeugs führen, was in der Regel eine Qualitätsabwertung des flächigen Halbzeugs zumindest aufgrund von Oberflächenbeschädigungen zur Folge hat.

Eine Positionierung des Planheitsfehlerbereichs gegenüber den Presswerkzeugen erfolgt heute zum Teil in einem semi-automatischen Betrieb, wobei die Position des Planheitsfehlers an dem flächigen Halbzeug in der Regel mittels eines Planheitsmessgerät ermittelt wird.

Der eigentliche Richtvorgang des flächigen Halbzeugs zur Reduzierung von Planheitsfehlern wird letztendlich durch einen Bediener der Richtpresse vorgenommen.

Diese Verfahrensweise ist jedoch sehr zeitintensiv und der Erfolg einer Planheitsfehlerreduzierung hängt zum Großteil von der individuellen Erfahrung dieses Bedieners ab.

Oftmals erfolgt ein Beseitigen von Planheitsfehlern auch unter Zuhilfenahme von Gegenlagern, welche zum Beispiel in einen Pressbereich einschwenkbar an einem Maschinengestell, an einem Presstisch oder an einem Pressstößel gelagert sind. Nachteilig hierbei ist es, dass sie in ihrer Höhenposition, also in vertikaler Richtung, nicht verstellt werden können, um den Planheitsfehler auch in Randbereichen von Presswerkzeugen optimal zu reduzieren.

Beispielsweise ist aus der US 6,205.830 B1 eine Blechverarbeitungsvorrichtung bekannt, bei welcher ein von einem Coil abgewickelter Blechstreifen zuerst mit einer Rollenapparatur begradigt, anschließend mit einem Streckrichter gestreckt und danach mit einer Oberflächenaufbereitungseinrichtung behandelt wird, um den zuvor gewickelten Blechstreifen für anschließende Prozesse begradigt bereitzustellen.

Ferner ist in der GB 1,021,794 eine Blechbegradigungsapparatur beschrieben, mittels welcher gebogene Metallbänder begradigt werden können. Die Blechbegradigungsapparatur umfasst hierzu unter anderem eine Presse mit zwei Presswerkzeugen, zwischen welchen das gebogene Metallband abschnittsweise pressbar ist.

Aus der WO 2013/135688 A1 ist darüber hinaus noch eine Vorrichtung zum Richten eines Metallbands mit einer Vielzahl an gruppierten Richtwalzen bekannt, mittels welcher das Metallband beim Durchlaufen einer Richtstrecke besonders differenziert gerichtet werden kann. Hierzu sind zumindest einige der Richtwalzen in ihrer axialen Richtung hinsichtlich ihres axialen Biegeverlaufs durch einzeln ansteuerbare Stellglieder einstellbar.

Der Erfindung liegt die Aufgabe zugrunde, gattungsgemäße Presswerkzeugteile zum Beseitigen eines Planheitsfehlers an einem flächigen Halbzeug sowie die Presswerkzeugteil aufnehmende Vorrichtungen zum Beseitigen eines Planheitsfehlers an einem flächigen Halbzeug weiterzuentwickeln, um zumindest die vorstehend genannten Nachteile zu überwinden.

Die Aufgabe der Erfindung wird von einem Presswerkzeugteil zum Beseitigen eines Planheitsfehlers an einem flächigen Halbzeug mit einer dem flächigen Halbzeug zugewandten Pressfläche gelöst, wobei das Presswerkzeugteil durch eine Materialschwächung voneinander getrennte Teilhälften aufweist, welche einerseits mittels eines elastisch biegbaren Biegebrückenbereichs des Presswerkzeugteils miteinander und andererseits jeweils mit einem gemeinsamen Aktuator wirkverbunden sind, um die Pressfläche des Presswerkzeugteils in Abhängigkeit des Planheitsfehlers elastisch zu verformen.

Durch diesen erfindungsgemäßen Aufbau des Presswerkzeugteils ist es im Sinne eines ersten Aspekts der vorliegenden Erfindung konstruktiv auf äußerst einfache Weise möglich, ein verformbares Presswerkzeugteil eines in einer Richtpresse eingesetzten Presswerkzeugs optimal auf vorhandene Planheitsfehler einzustellen, um diese mit keinen oder nur zu vernachlässigbaren Qualitätseinschränkungen zu beseitigen.

Bevorzugt ist das verformbare Presswerkzeugteil in zwei miteinander wirkverbundene Teilhälften unterteilt, wobei das verformbare Presswerkzeugteil in Richtung quer zur Transportrichtung des flächigen Halbzeugs durch die Materialschwächung geteilt ist.

Durch die Materialschwächung erfährt das Presswerkzeugteil eine strukturelle Schwächung, wodurch es einfacher verformt bzw. gebogen werden kann.

Es versteht sich, dass das verformbare Presswerkzeugteil auch mehrere Teilhälften aufweisen kann, wenn dies bezüglich einer Richtpresse vorteilhaft ist.

In der Regel bilden zwei solcher Presswerkzeugteile gemeinsam ein Presswerkzeug einer Richtpresse zum Beseitigen von Planheitsfehlern an flächigen Halbzeugen, wobei eines der Presswerkzeugteile einem meistens ortsfesten Presstisch und eines der Presswerkzeugteile einem dem Presstisch gegenüber verfahrbaren Pressstößel zugeordnet ist. Hiervon abweichend sind natürlich auch andere Aufbauvarianten möglich.

Im Wesentlichen handelt es sich bei dem vorliegenden Presswerkzeug also um ein Richtpresswerkzeug, mittels welchem Planheitsfehler beseitigbar sind. Insofern betrifft die Erfindung im Speziellen ein Planheitsfehler-Richtpresswerkzeugteil.

Der Ausdruck "Biegebrückenbereich" beschreibt im Sinne der Erfindung eine körperliche Verbindung, mittels welcher die Teilhälften miteinander verbunden sind.

Bevorzugt bilden die Teilhälften und der Biegebrückenbereich eine körperliche Einheit. Beispielsweise sind sie stoffschlüssig miteinander verbunden.

Es können zusätzlich aber auch andere Verbindungsarten vorgesehen sein.

Vorliegend ist es äußerst vorteilhaft, dass der gemeinsame Aktuator derart an den Teilhälften angeordnet ist, dass eine elastische Verformung der Pressfläche bzw. des Presswerkzeugteils auch unter Umgehung von zum Beseitigen von Planheitsfehlern aufzubringenden Presskräften erfolgen kann.

Das heißt mit anderen Worten, dass insbesondere die Pressfläche elastisch verformt werden kann, ohne dass Presskräfte zwischen einem flächigen Halbzeug, wie etwa einem Blech bzw. einem Dickblech, und dem Presswerkzeugteil wirken müssen.

Insofern werden erforderliche auf das Presswerkzeugteil wirkende Verformungskräfte bzw. Biegekräfte im Sinne der Erfindung durch den gemeinsamen Aktuator aufgebracht.

Hierfür durch den Aktuator aufzubringende Arbeitskräfte können kleiner gehalten werden, wenn der Pressstößel konstruktiv derart mit einer Verformungshilfe bzw. Biegehilfe ausgestaltet ist, dass er sich in Abhängigkeit von den durch den Aktuator aufzubringenden Arbeitskräften leichter verformen und insbesondere durchbiegen kann. Derartige Verformungs- bzw. Biegehilfen können vielfältig ausgestaltet sein, beispielsweise mithilfe einer geeignet ausgestalteten Gelenkeinrichtung.

Besonders zweckmäßig ist es, wenn der gemeinsame Aktuator unmittelbar an den Teilhälften befestigt ist, so dass eine Verformung des Presswerkzeugteils und damit auch der Pressfläche noch präziser vorgenommen werden kann, da vorliegend eine äußerst spielfreie Verbindung erzeugbar ist.

Sind die voneinander getrennten Teilhälften mittels des gemeinsamen Aktuators miteinander wirkverbunden, kann auf weitere Bauteile oder Bauteilgruppen verzichtet werden kann.

Der Aktuator kann möglichst übersetzungsfrei mit den Teilhälften des Presswerkzeugteils kommunizieren, wenn der gemeinsame Aktuator von dem Presswerkzeugteil gehaltert bzw. getragen ist.

Das vorliegende Presswerkzeugteil kann sehr kompakt gebaut werden, wenn der gemeinsame Aktuator in dem Presswerkzeugteil integriert ist. Bevorzugt ist der Aktuator derart in dem Presswerkzeugteil integriert, dass er innerhalb einer von dem Presswerkzeugteil erzeugten Einhüllenden angeordnet ist, wobei diese Einhüllende durch die äußere Begrenzung des Presswerkzeugteils formuliert ist.

Es versteht sich, dass der vorliegende Aktuator vielfältig aufgebaut sein kann. So kann der Aktuator beispielsweise einen elektrisch oder einen pneumatisch betriebenen Antriebsmotor oder dergleichen umfassen.

Vorzugsweise umfasst der gemeinsame Aktuator eine Hydraulikzylindereinheit, so dass durch den Aktuator problemlos ausreichend hohe Arbeitskräfte bereitgestellt werden können, um wiederum zum Beseitigen von Planheitsfehlern genügend hohe Verformungs-, Biege, und auch Presskräfte aufbringen zu können.

Es hat sich des Weiteren gezeigt, dass eine Verformung des Presswerkzeugteils bzw. der Pressfläche mit einem erstaunlich geringen baulichen Aufwand erzielt werden kann, wenn der gemeinsame Aktuator eine Zylinderkammer umfasst, welche durch eine der Teilhälften des Presswerkzeugs ausgestaltet ist.

In diesem Zusammenhang ist es vorteilhaft, wenn der gemeinsame Aktuator ein Kolbenelement umfasst, wobei ein erstes Ende des Kolbenelements mit der ersten Teilhälfte des Presswerkzeugteils und ein zweites Ende des Kolbenelements mit der zweiten Hälfte des Presswerkzeugteils wechselwirkend verbunden ist.

Durch einen derartigen konstruktiven Aufbau können die Teilhälften des Presswerkzeugteils neben dem elastisch biegbaren Biegebrückenbereich baulich einfach miteinander verbunden werden.

Aufgrund des vorliegend kompakten Aufbaus eines den Aktuator umfassenden Presswerkzeugteils kann Letzteres problemlos selbst an einem bewegten Funktionsbauteil, wie etwa einem Pressstößel, einer Richtpresse oder dergleichen eingesetzt werden. Insofern sieht eine vorteilhaft Ausführungsvariante auch vor, dass der gemeinsame Aktuator mittels des Presswerkzeugteils an einem verfahrbaren Pressstößel einer Vorrichtung zum Beseitigen von Planheitsfehlern an flächigen Halbzeugen oder an einem Presstisch angeordnet ist.

Um den an dem Presswerkzeugteil vorgesehenen Aktuator mit einem baulich nur geringen Aufwand ansteuern zu können, ist es vorteilhaft, wenn das Presswerkzeugteil eine Fluid-Anschlusseinrichtung zum fluidischen Betreiben des gemeinsamen Aktuators umfasst.

Es versteht sich, dass eine derartige Fluid-Anschlusseinrichtung vielfältig an dem Presswerkzeugteil realisiert sein kann. Beispielsweise kann sie mittels eines von außen an dem Presswerkzeugteil angebrachten Fuidleitungssystem technisch leicht umgesetzt sein.

Besonders gut vor äußeren Einflüssen geschützt ist die Fluid-Anschlusseinrichtung bereitgestellt, wenn das Fuidleitungssystem sowie Bauteile oder Bauteilgruppen hiervon innerhalb des Presswerkzeugteils angeordnet sind, beispielsweise mittels Bohrungen oder sonstigen in das Presswerkzeugteil eingebrachte Kavitäten.

Das vorliegende Presswerkzeugteil lässt sich noch einfacher an einem verfahrbaren Pressstößel oder dergleichen einer Richtpresse anbringen, wenn das Presswerkzeugteil ein geteiltes Tragrahmenteil umfasst, in welchem der gemeinsame Aktuator integriert ist.

Die vorliegenden Teilhälften des Presswerkzeugteils können nahezu beliebig ausgestaltet sein. Bevorzugt ist das Presswerkzeugteil durch die Materialschwächung in zwei gleich große Teilhälften unterteilt, wodurch die elastisch Verformung des Presswerkzeugteils bzw. der Pressfläche einfacher berechenbar ist.

Die Beherrschbarkeit von gezielter eingesetzten Presskräften kann signifikant verbessert werden, wenn die Materialschwächung sich ausgehend von dem elastisch biegbaren Biegebrückenbereich entlang einer senkrecht zur Pressfläche verlaufenden Ebene erstreckt.

Eine durch den vorliegenden Aktuator erreichbare elastische Verformung des Presswerkzeugteils, kann unabhängig von einer korrespondierenden Verformung einer Halteeinrichtung zum Haltern des Presswerkzeugteils erreicht werden, wenn die Teilhälften des Pressenwerkzeugteils beweglich an einem Pressstößel gehaltert sind.

Neben dem ersten Aspekt einer guten elastischen Verformbarkeit der Pressfläche des Presswerkzeugteils bzw. des Presswerkzeugteils per se, ist es nach einem weiteren Aspekt der Erfindung vorteilhaft, die Steifigkeit des Presswerkzeugteils manipulieren zu können, um ein verformbares Presswerkzeugteil eines in einer Richtpresse eingesetzten Presswerkzeugs optimal auf vorhandene Planheitsfehler einzustellen, um diese mit keinen oder nur zu vernachlässigbaren Qualitätseinschränkungen zu beseitigen

Insofern ist es nach diesem weiteren Aspekt auch unabhängig von den übrigen Merkmalen der Erfindung vorteilhaft, wenn das Presswerkzeugteil Mittel zum Beeinflussen der Steifigkeit des Presswerkzeugteils umfasst.

Bevorzugt sind diese Mittel zum Beeinflussen der Steifigkeit derart ausgestaltet, dass das Presswerkzeugteil und insbesondere die Pressfläche dieses Presswerkzeugteils zumindest bereichsweise in Abhängigkeit eines Planheitsfehlers an einem flächigen Halbzeug hinsichtlich der Steifigkeit manipulierbar sind.

Es versteht sich, dass derartige Mittel zum Beeinflussen der Steifigkeit unterschiedlich realisiert sein können, um eine zumindest bereichsweise an Planheitsfehler angepasste Steifigkeit an dem Presswerkzeugteil individuell erzeugen zu können.

An dieser Stelle sei noch deutlich darauf hingewiesen, dass mit den Mitteln zum Beeinflussen der Steifigkeit natürlich auch die Kontur des Presswerkzeugteils kumulativ oder alternativ verändert werden kann. Insofern handelt es sich bei den Mitteln zum Beeinflussen der Steifigkeit auch um Mittel zum Verändern der Kontur zumindest der Pressfläche des Presswerkzeugteils.

Es versteht sich, dass Aktuatoren der Mittel zum Beeinflussen der Steifigkeit unterschiedlich ausgebildet sein können.

Eine erste Ausführungsvariante sieht etwa vor, dass die Mittel zum Beeinflussen der Steifigkeit des Presswerkzeugteils wenigstens eine Druckkammer umfassen, welche in dem Pressenwerkzeugteil integriert ist. Durch unterschiedliche Drücke innerhalb der Druckkammer kann das Presswerkzeugteil und damit auch die mit dem flächigen Halbzeug wechselwirkende Pressfläche im Sinne der Erfindung unterschiedlich steif ausgestaltet werden.

Eine derartige Druckkammer kann besonders flach bauend in das Presswerkzeugteil integriert werden, so dass das Presswerkzeugteil trotz Integration der Mittel zum Beeinflussen der Steifigkeit mit einer geringen Konstruktionshöhe gebaut werden kann.

Die unterschiedlichen Drücke innerhalb der in dem Presswerkzeugteil untergebrachten wenigstens einen Druckkammer können beispielsweise mithilfe einer außerhalb des Presswerkzeugteils angeordneten Druckeinstelleinrichtung vorgenommen werden.

Beispielsweise können die Mittel zum Beeinflussen der Steifigkeit hierbei ein pneumatisches oder hydraulisches Fluid umfassen.

Alternativ können die Mittel zum Beeinflussen der Steifigkeit des Presswerkzeugteils wenigstens eine weitere Hydraulikzylindereinheit umfassen, welche in dem Pressenwerkzeugteil integriert ist.

Eine andere Ausführungsvariante sieht vor, dass die Mittel zum Beeinflussen der Steifigkeit des Presswerkzeugteils wenigstens eine Keilmechanikeinheit umfassen, welche in dem Pressenwerkzeugteil integriert ist, wobei die Keilmechanikeinheit wenigstens ein relativ gegenüber dem Presswerkzeugteil verlagerbares Keilelement aufweist.

Auch mittels einer derart aufgebauten Keilmechanik gelingt eine vielfältige Versteifung des Presswerkzeugteils in Abhängigkeit eines an dem flächigen Halbzeug vorliegenden Planheitsfehlers.

Ist hierbei das verlagerbare Keilelement an einer im Wesentlichen parallel zu der Pressfläche ausgerichteten Verlagerungsfläche verlagerbar angeordnet, können die Mittel zum Beeinflussen der Steifigkeit ebenfalls sehr flach bauend bereitgestellt werden.

Damit das Presswerkzeugteil insbesondere in Bereichen seitlich seiner Eckbereiche hinsichtlich seiner Steifigkeit unterschiedlichst eingestellt werden kann, ist es vorteilhaft, wenn das Presswerkzeugteil Kavitäten zum Aufnehmen der Mittel zum Beeinflussen der Steifigkeit aufweist, welche in Eckbereichen des Presswerkzeugteils angeordnet sind.

Nach einem anderen Aspekt der Erfindung ist es vorteilhaft, wenn das Presswerkzeugteil senkrecht zur Pressfläche translatorisch bewegbare Niederhalter zum Niederhalten des flächigen Halbzeugs umfasst. Hierdurch gelingt es kumulativ oder alternativ, dass insbesondere in den Randbereichen von Presswerkzeugen vorhandene Planheitsfehler optimaler zu beseitigen.

Sind die vorliegenden Niederhalter, welche an dem Presswerkzeugteil gehaltert sind, senkrecht zur Pressfläche dieses Presswerkzeugteils translatorisch bewegbar, kann in Bezug auf das Presswerkzeugteil eine Höheneinstellung der Niederhalter selbst dann noch erfolgen, wenn sich die Pressfläche des Presswerkzeugteils bereits in Wirkkontakt mit dem flächigen Halbzeug befindet.

Auch Aktuatoren zum Bewegen der Niederhalter können unterschiedlichst ausgestaltet sein.

Allein hierdurch kann ein Presswerkzeugteil insbesondere einer gattungsgemäßen Richtpresse vorteilhaft weiter entwickelt werden, so dass die Merkmalskombinationen hinsichtlich des zur Pressfläche translatorisch bewegbaren Niederhalters bereits ohne die übrigen Merkmale der Erfindung vorteilhaft ist.

Darüber hinaus gelingt ein Austausch von Presswerkzeugteilen an einer Richtpresse besonders schnell und unkompliziert, wenn das Presswerkzeugteil eine Fahreinrichtung umfasst, mittels welcher es aus einer durch ein Presswerkzeug formulierten Arbeitsposition heraus in eine neben dem Presswerkzeug positionierten Wechselposition hinein verlagerbar ist. Auch hierdurch kann ein Presswerkzeugteil insbesondere einer gattungsgemäßen Richtpresse ohne die übrigen Merkmale der vorliegenden Erfindung vorteilhaft weiter entwickelt werden.

Ferner ist es vorteilhaft, wenn die Pressfläche des Presswerkzeugteils mittels eines Pressflächenteils ausgestaltet ist, welches eine Pressflächenbreite aufweist, welche größer ist als die Breite des flächigen Halbzeugs. Hierdurch können beispielsweise mehrere an einem flächigen Halbzeug vorhandene Planheitsfehler idealerweise gleichzeitig in einem Pressvorgang beseitigt oder zumindest signifikant reduziert werden.

Darüber hinaus wird die Aufgabe der Erfindung auch von einer Vorrichtung zum Beseitigen von Planheitsfehlern an flächigen Halbzeugen, insbesondere von einer Richtpresse, mit einem Maschinengestell, an welchem ein Pressstößel in Pressrichtung gegenüber einem Presstisch verfahrbar gelagert ist, und mit einem Presswerkzeug umfassend wenigstens ein eine Pressfläche aufweisendes Presswerkzeugteil, mittels welchem Planheitsfehler an dem flächigen Halbzeug beseitigbar sind, gelöst, wobei die Vorrichtung ein Presswerkzeugteil nach zumindest einem der hier beschriebenen Merkmale aufweist.

Vorteilhafterweise können mittels der mit dem vorliegenden Presswerkzeugteil ausgerüsteten Vorrichtung Planheitsfehler an flächigen Halbzeugen besonders schnell und effektiv beseitigt werden, da das Presswerkzeugteil aufgrund seiner Ausgestaltung an sich einerseits hinsichtlich seiner Gestalt und Steifigkeit konstruktiv einfach vielfältig manipuliert und andererseits schneller an der Vorrichtung ausgewechselt werden kann.

Ferner können insbesondere auch in einem flächigen Halbzeug befindliche Randwellen vermieden werden, wenn die Vorrichtung kumulativ oder alternativ eine Kippeinrichtung aufweist, mittels welcher ein Presswerkzeugteil um eine zu der Pressfläche parallel verlaufende Kippachse herum kippbar an dem Pressstößel oder an dem Maschinengestell gelagert ist.

Es versteht sich, dass eine solche Kippeinrichtung unterschiedlich ausgebildet sein kann. Beispielsweise ist das Presswerkzeugteil mittels einer entsprechend ausgestalteten Aufhängungseinrichtung an dem Pressstößel angeordnet, dass das Presswerkzeugteil um die zu der Pressfläche parallel verlaufende Kippachse herum kippbar an dem Pressstößel gelagert ist.

Konstruktiv noch robuster kann die Kippeinrichtung realisiert werden, wenn die Kippeinrichtung wenigstens eine, vorzugsweise zwei, zwischen dem Pressstößel und dem Maschinengestell wirkende Hydraulikzylindereinheiten umfasst, um den Pressstößel um die Kippachse herum zu kippen. Mittels dieser Hydraulikeinheiten kann der Pressstößel einerseits in Pressrichtung bewegt werden, wenn etwa zwei miteinander korrespondierende Hydraulikzylindereinheiten gleichartig angesteuert werden. Andererseits kann der gesamte Pressstößel mit dem hieran gehalterten Presswerkzeugteil um die Kippachse herum gekippt werden, indem die Hydraulikzylindereinheiten unterschiedlich angesteuert werden, so dass der Pressstößel an einer Seite anders bewegt wird als auf der gegenüberliegenden Seite des Pressstößels.

Da an gattungsgemäßen Vorrichtungen zum Beseitigen von Planheitsfehlern an flächigen Halbzeugen, insbesondere an gattungsgemäßen Richtpressen, durch diese Kippeinrichtung bisher nicht erreichbare Effekte erzielt werden können, sind auch die Merkmale bezüglich der Kippeinrichtung auch ohne die übrigen Merkmale der Erfindung vorteilhaft.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft eine Vorrichtung zum Beseitigen von Planheitsfehlern an flächigen Halbzeugen sowie unterschiedliche Presswerkzeugteile hierfür dargestellt und beschrieben sind.

In der Zeichnung zeigen:
- Figur 1: schematisch eine Ansicht einer Richtpresse mit einem erfindungsgemäßen Presswerkzeugteil und einer Kippeinrichtung zum Kippen dieses Presswerkzeugteils um eine zu der Pressfläche parallel verlaufende Kippachse;
- Figur 2: schematisch eine Ansicht eines alternativen einen Aktuator aufweisenden Presswerkzeugteils ohne einen Tragrahmen zum Aufnehmen des Aktuators ;
- Figur 3: schematisch eine Ansicht eines anderen Presswerkzeugteils mit Mitteln zum Beeinflussen der Steifigkeit umfassend zwei innerhalb des Presswerkzeugteils angeordnete Druckkammern;
- Figur 4: schematisch eine Ansicht eines weiteren Presswerkzeugteils mit Mitteln zum Beeinflussen der Steifigkeit umfassend zwei innerhalb des Presswerkzeugteils angeordnete Hydraulikzylindereinheiten;
- Figur 5: schematisch eine Ansicht eines Presswerkzeugteils mit Mitteln zum Beeinflussen der Steifigkeit umfassend zwei innerhalb des Presswerkzeugteils angeordnete Keilmechanikeinheiten;
- Figur 6: schematisch eine Ansicht eines Presswerkzeugteils mit zwei senkrecht zur Pressfläche translatorisch bewegbaren Niederhaltern zum Niederhalten eines flächigen Halbzeugs; und
- Figur 7: schematisch eine Ansicht eines Presswerkzeugteils mit einer Fahreinrichtung zum Auswechseln des Presswerkzeugs quer zu einer Pressrichtung.

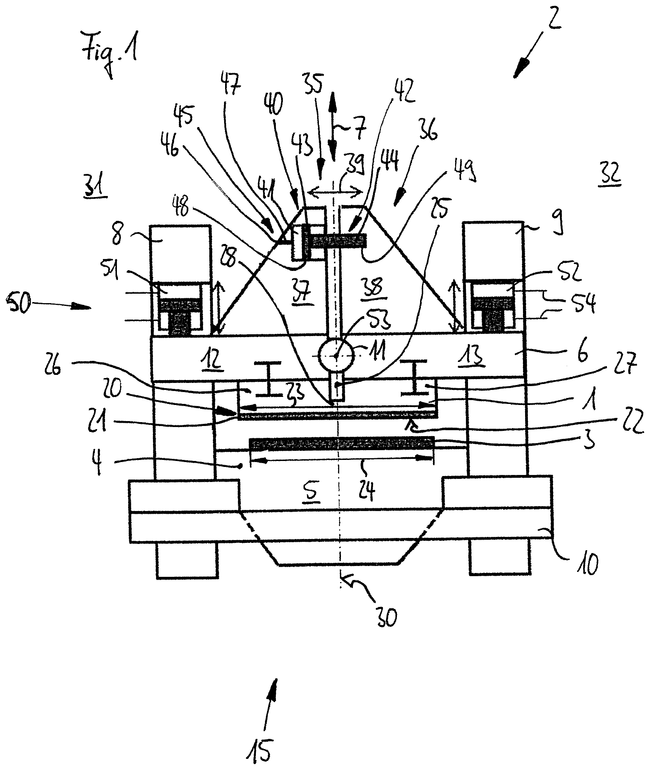

Das in der Figur 1 gezeigte Presswerkzeugteil 1 ist ein Bestandteil eines in einer Vorrichtung 2 zum Beseitigen von Planheitsfehlern (nicht dargestellt) an einem flächigen Halbzeug 3 eingesetzten Presswerkzeugs (nicht explizit beziffert) und korrespondiert mit einem weiteren Presswerkzeugteil 4, welches in diesem Ausführungsbeispiel unterhalb des flächigen Halbzeugs 3 durch einen Presstisch 5 der Vorrichtung 2 verkörpert ist.

Das Presswerkzeugteil 1 hingegen ist an einem gegenüber dem Presstisch 5 verfahrbaren Pressstößel 6 und somit oberhalb des flächigen Halbzeugs 3 gehaltert, so dass das Presswerkzeugteil 1 in Pressrichtung 7 bewegt werden kann, um Presskräfte auf das an dem Presstisch 5 platzierten flächigen Halbzeug 3 ausüben zu können.

Hierbei sind der Presstisch 5 ortsfest und der Pressstößel 6 verlagerbar an zwei Ständerelemente 8 und 9 eines Maschinengestells 10 der Vorrichtung 2 angeordnet.

Darüber hinaus weist der Pressstößel 6 eine Gelenkverbindung 11 auf, mittels welcher zwei Pressstößelbereiche 12 und 13 gelenkig miteinander verbunden sind, wodurch dem Pressstößel 6 eine höhere Flexibilität innewohnt.

Die Vorrichtung 2 zum Beseitigen von Planheitsfehlern an dem flächigen Halbzeug 3 ist als Richtpresse 15 ausgeführt, welche ausschließlich dem Zweck der Beseitigung von Planheitsfehlern an dem flächigen Halbzeug 3 dient.

Insofern dient das Presswerkzeugteil 1 ebenfalls und bevorzugt ausschließlich zum Beseitigen von Planheitsfehlern an dem flächigen Halbzeug 3. Genauer gesagt, bei dem Presswerkzeugteil 1 handelt es sich um ein Planheitsfehler-Richtpresswerkzeugteil (nicht gesondert beziffert).

Das Presswerkzeugteil 1 besitzt an seiner Unterseite 20 einen Pressflächenbereich 21, welcher eine dem flächigen Halbzeug 3 zugewandte Pressfläche 22 ausgestaltet.

Damit auch mehrere Planheitsfehler an dem flächigen Halbzeug 3 in einem einzigen Pressvorgang oder zumindest in sehr wenigen Pressvorgängen beseitigt werden können, weist der Pressflächenbereich 21 des Presswerkzeugteils 1 eine Pressflächenbreite 23 auf, welche größer ist als die Breite 24 des flächigen Halbzeugs 3.

Ferner ist das Presswerkzeugteil 1 durch eine Materialschwächung 25 in zwei voneinander getrennte Teilhälften 26 und 27 unterteilt, wobei neben bzw. in diesem Ausführungsbeispiel unterhalb der Materialschwächung 25 ein elastisch biegbarer Biegebrückenbereich 28 des Presswerkzeugteils 1 vorhanden ist, mittels welchem die zwei Teilhälften 26 und 27 körperlich miteinander verbunden sind.

Das Presswerkzeugteil 1 ist somit derart aufgebaut, dass die Materialschwächung 25 eine Teilungsebene 30 formuliert, wobei die erste Teilhälfte 26 auf einer ersten Seite 31 der Teilungsebene 30 liegt und die zweite Teilhälfte 27 auf einer der ersten Seite 31 gegenüberliegenden zweiten Seite 32 der Teilungsebene 30 angeordnet ist.

Die Materialschwächung 25 ist somit durch drei Innenseiten des Presswerkzeugteils 1 begrenzt, nämlich durch Seiten (nicht zusätzlich beziffert) der zwei Teilhälften 26 und 27 und durch des elastisch biegbaren Biegebrückenbereichs 28.

Insofern erstreckt sich die Materialschwächung 25 ausgehend von dem elastisch biegbaren Biegebrückenbereich 28 hochwärts entlang dieser Teilungsebene 30.

Durch die Materialschwächung 25 erfährt das Presswerkzeugteil 1 eine strukturelle Schwächung, wodurch es einfacher verformt bzw. gebogen werden kann.

Diesbezügliche Verformungskräfte bzw. Biegekräfte werden als Arbeitskräfte durch einen Aktuator 35 aufgebracht, welcher hierzu entsprechend mit den zwei Teilhälften 26 und 27 wirkverbunden ist.

In diesem ersten Ausführungsbeispiel baut das Presswerkzeugteil 1 durch ein geteiltes Tragrahmenteil 36, welches mit dem Presswerkzeugteil 1 einstückig verbunden ist, recht hoch, wodurch der Vorteil entsteht, dass der Aktuator 35 weiter oben und somit beabstandet von dem Pressstößel 6 angeordnet werden kann.

Hierbei besteht das geteilte Tragrahmenteil 36 aus einer ersten Rahmenteilhälfte 37, welche starr mit der ersten Teilhälfte 26 verbunden ist, und aus einer zweiten Rahmenteilhälfte 38, welche starr mit der zweiten Teilhälfte 27 wirkverbunden ist.

Die erste Rahmenteilhälfte 37 ist somit eine Verlängerung der erste Teilhälfte 26 des Presswerkzeugteils 1 und die zweite Rahmenteilhälfte 38 ist eine entsprechende Verlängerung der zweiten Teilhälfte 27 des Presswerkzeugteils 1. Somit ist Aktuator 35 bereits sehr gut in dem Presswerkzeugteil 1 integriert.

Dadurch, dass der Aktuator 35 mittels des geteilten Tragrahmenteils 36 weiter entfernt von dem elastisch biegbaren Biegebrückenbereich 28 angeordnet ist, verbessern sich die Hebelverhältnisse bezüglich des Aktuators 35 und des elastisch biegbaren Biegebrückenbereichs 28, so dass von dem Aktuator 35 weniger Arbeitskräfte erzeugt werden müssen, um eine gewünschte Verformung an dem Presswerkzeugteil 1 einstellen zu können.

Durch diese günstigen Hebelverhältnisse kann der Aktuator 35 auch kleiner ausgeführt werden, da er weniger Arbeitskräfte aufbringen muss, um das Presswerkzeugteil 1 zu verformen. Dies wird zudem noch durch den gelenkig unterteilten Pressstößel 6 unterstützt, da dieser sich in Abhängigkeit von durch den Aktuator 35 aufzubringenden Arbeitskräften verformen und insbesondere durchbiegen kann.

Ferner ist die Zugänglichkeit des Aktuators 35 verbessert.

Da das geteilte Tragrahmenteil 36 starr und nicht gelenkig, dass heißt ohne ein Zwischenschalten von Gelenken oder eines Getriebes, mit dem eigentlichen Presswerkzeugteil 1 verbunden ist, kann im Sinne vorliegende Erfindung gesagt werden, dass der Aktuator 35 unmittelbar an den Teilhälften 26 und 27 befestigt ist. Hierdurch können die Einstellungen hinsichtlich einer Verformung bzw. Biegung an dem Presswerkzeugteil 1 noch präziser vorgenommen werden, da die von dem Aktuator 35 aufgebrachten Arbeitskräfte idealerweise spielfrei insbesondere bis in den elastisch biegbaren Biegebrückenbereich 28 eingebracht werden können.

Zum Verformen bzw. Biegen des Presswerkzeugteils 1 wird der Aktuator 35 gemäß der senkrecht zu der Teilungsebene 30 verlaufenden Bewegungsrichtung 39 auseinander bzw. ineinander gefahren bzw. verlagert bzw. verkürzt, wodurch die zwei Rahmenhälften 37 und 38 bzw. die zwei Teilhälften 26 und 27 um den elastisch biegbaren Biegebrückenbereich 28 herum bewegt werden.

Hierbei ist der Aktuator 35 derart in das geteilte Tragrahmenteil 36 integriert, dass die voneinander getrennten Teilhälften 26 und 27 mittels des Aktuators 35 miteinander wirkverbunden sind.

In diesem ersten Ausführungsbeispiel ist der Aktuator 35 als eine Hydraulikzylindereinheit 40 ausgestaltet, wobei die Zylinderkammer 41 der Hydraulikzylindereinheit 40 unmittelbar von der ersten Rahmenteilhälfte 37 des geteilten Tragrahmenteils 36 ausgebildet ist.

Das entsprechende Kolbenelement 42 der Hydraulikzylindereinheit 40 ist mit seinem Kolbenboden 43 in der Zylinderkammer 41 platziert und somit an der ersten Rahmenteilhälfte 37 befestigt.

Mit seiner Kolbenstange 44 ist das Kolbenelement 42 der Hydraulikzylindereinheit 40 an der zweiten Rahmenteilhälfte 38 befestigt.

Der Aktuator 35 bzw. die Hydraulikzylindereinheit 40 wird mittels einer entsprechend ausgestalteten Fluid-Anschlusseinrichtung 45 mit einem Hydraulikfluid versorgt, wobei die Fluid-Anschlusseinrichtung 45 zumindest einen Eingangs- und/oder Ausgangsanschluss 46 (nur exemplarisch beziffert) und zumindest eine Fluidleitung 47 umfasst, um eine fluidische Verbindung zwischen der Zylinderkammer 41 und einer Versorgungseinheit (nicht gezeigt) sicherstellen zu können.

Insofern sind ein erstes Ende 48 des Kolbenelements 42 mit der ersten Teilhälfte 27 des Presswerkzeugteils 1 und ein zweites Ende 49 des Kolbenelements 42 mit der zweiten Hälfte 27 des Presswerkzeugteils 1 wechselwirkend verbunden.

Insbesondere Randwellen (nicht gezeigt) in dem flächigen Halbzeug 3 können effektiv verhindert werden, da die vorliegende Vorrichtung 2 in diesem Ausführungsbeispiel kumulativ eine Kippeinrichtung 50 mit zwei zwischen dem Pressstößel 6 und den Ständerelementen 8 und 9 des Maschinengestells 10 angeordneten weiteren Hydraulikzylindereinheiten 51 und 52 aufweist.

Mittels dieser Kippeinrichtung 50 sind der Pressstößel 6 und insbesondere das Presswerkzeugteil 1 um eine zu der Pressfläche 22 parallel verlaufende Kippachse 53 herum kippbar an dem Pressstößel 6 oder an dem Maschinengestell 10 gelagert, wodurch die Wechselwirkung zwischen dem Presswerkzeugteil 1 und dem flächigen Halbzeug 3 um nochmals weitere Einstellmöglichkeiten erweitert werden kann.

Die weiteren zwei Hydraulikzylindereinheiten 51 und 52 weisen jeweils Hydraulikanschlüsse 54 (nur exemplarisch beziffert) auf, worüber sie mit einer Hydraulikflüssigkeit gespeist werden können.

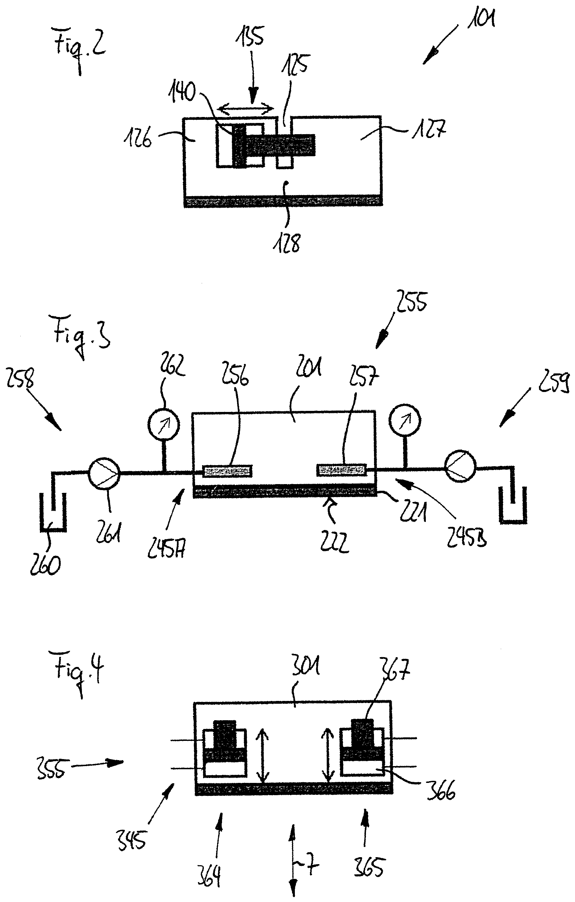

Bei dem in der Figur 2 gezeigten alternativen Presswerkzeugteil 101 ist auf das zuvor beschriebene geteilte Tragrahmenteil 36 verzichtet, so dass der Aktuator 135 in Gestalt der Hydraulikzylindereinheit 140 direkt neben dem elastisch biegbaren Biegebrückenbereich 128 angeordnet in dem Presswerkzeugteil 101 integriert ist.

Hierdurch baut das Presswerkzeugteil 101 noch kompakter, wobei das Presswerkzeugteil 101 durch die Materialschwächung 125 in zwei Teilhälften 126 und 127 unterteilt ist.

Diese zwei Teilhälften 126 und 127 sind hierbei wieder durch den elastisch biegbaren Biegebrückenbereich 128 und den Aktuator 135 miteinander wirkverbunden.

Zur Funktionsweise dieses zweiten Ausführungsbeispiels wird auf das zuvor beschriebene erste Ausführungsbeispiel verwiesen, um Wiederholungen zu vermeiden.

Bei dem in der Figur 3 gezeigten weiteren Ausführungsbeispiel weist ein anderes Presswerkzeugteil 201 Mittel 255 zum Beeinflussen der Steifigkeit des Presswerkzeugteils 201 auf, welche kumulativ oder alternativ vorgesehen sein können.

Die Mittel 255 zum Beeinflussen der Steifigkeit umfassen in diesem weiteren Ausführungsbeispiel zwei Druckkammer 256 und 257 zum Aufnehmen einer Hydraulikflüssigkeit, welche unmittelbar in dem Presswerkzeugteil 201 integriert sind; und zwar in unmittelbarer Nachbarschaft zu dem die Pressfläche 222 realisierenden Pressflächenbereich 221.

Ferner umfassen die Mittel 255 zum Beeinflussen der Steifigkeit noch zwei Fördereinrichtungen 258 und 259, wobei die erste Fördereinrichtung 258 mittels einer ersten Fluid-Anschlusseinrichtung 245A an der ersten Druckkammer 256 und die zweite Fördereinrichtung 259 mittels einer Fluid-Anschlusseinrichtung 245B an der zweiten Druckkammer 257 fluidisch angeschlossen sind, so dass jeder der zwei Druckkammern 256 bzw. 257 unabhängig voneinander angesteuert werden kann, wodurch wiederum die Vielfalt an unterschiedlich steife Bereiche an dem Presswerkzeugteil 201 gesteigert werden kann.

Jede der zwei Fördereinrichtungen 258 bzw. 259 verfügt mindestens über ein Hydraulikflüssigkeitsreservoir 260 (nur exemplarisch beziffert), über eine Förderpumpe 261 (nur exemplarisch beziffert) sowie über ein Regelventil 262 (nur exemplarisch beziffert), so dass der jeweilige Druck in den Druckkammern 256 bzw. 257 nahezu beliebig eingestellt werden kann.

Je nach dem welche Druckniveaus in den zwei Druckkammern 256 bzw. 257 eingestellt werden, kann die Steifigkeit des Presswerkzeugteils 1 über seine Pressflächenbreite 223 unterschiedlich eingestellt werden.

Das in der Figur 4 gelehrte weitere Presswerkzeugteil 301 besitzt ebenfalls Mittel 355 zum Beeinflussen der Steifigkeit des Presswerkzeugteils 301, welche innerhalb des Presswerkzeugteils 301 angeordnete weitere Hydraulikzylindereinheiten 364 und 365 aufweist, um die Steifigkeit an dem Presswerkzeugteil 301 zu manipulieren. Hierbei werden Zylinderkammern 366 (nur exemplarisch beziffert) von den weiteren Hydraulikzylindereinheiten 364 und 365 direkt durch das Presswerkzeugteil 301 selbst ausgestaltet, wobei sich in den Zylinderkammern 366 befindliche Kolbenelemente 367 (nur exemplarisch beziffert) durch Hydraulikdruckbeaufschlagungen in Pressrichtung 7 (siehe auch Figur 1) bewegen lassen, um die in den Zylinderkammern 366 vorherrschenden Drücke einstellen zu können. Hierzu umfassen die Mittel 355 zum Beeinflussen der Steifigkeit des Presswerkzeugteils 301 entsprechend ausgebildete Fluid-Anschlusseinrichtungen 345 (nur exemplarisch beziffert).

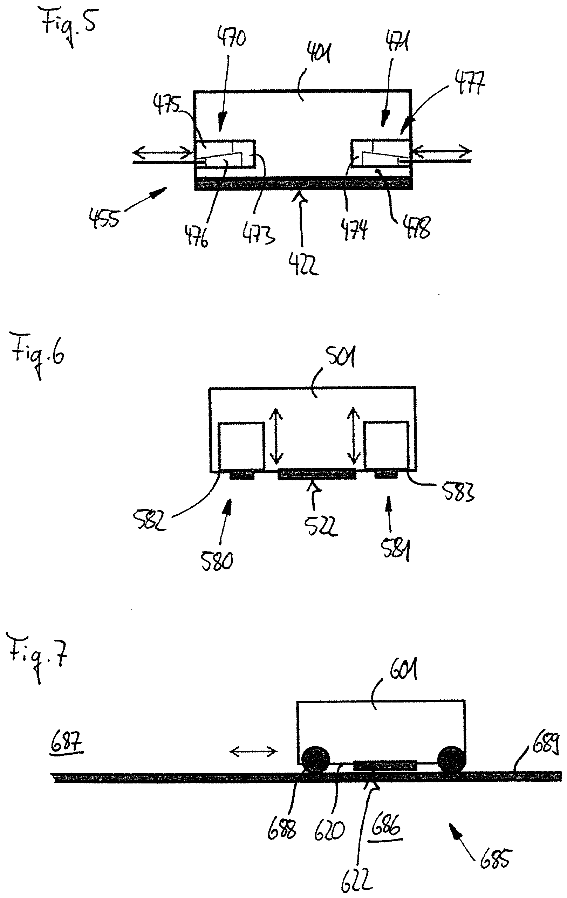

Bei dem gemäß der Figur 5 illustrierten Presswerkzeugteil 401 umfassen nochmals anders realisierte Mittel 455 zum Beeinflussen der Steifigkeit des Presswerkzeugteils 401 zwei Keilmechanikeinheiten 470 und 471, welche jeweils in einer durch das Presswerkzeugteil 401 verkörperten Kavitäten 473 bzw. 474 angeordnet sind.

Jede der zwei Keilmechanikeinheiten 470 und 471 verfügt über ein ortsfest in dem Presswerkzeugteil 401 angeordnetes Keilelement 475 (nur exemplarisch beziffert) und über ein demgegenüber verlagerbares Keilelement 476 (nur exemplarisch beziffert), wobei die jeweils miteinander zusammen wirkenden Keilelemente 475 und 476 derart miteinander wechselwirken, dass die Steifigkeit in Abhängigkeit der Lage des verlagerbaren Keilelements 476 zu dem ortsfesten Keilelement 475 variiert werden kann.

Das ortsfeste Keilelement 475 und das hierzu verlagerbare Keilelement 476 bilden jeweils ein Keilelementpaar 477 (nur exemplarisch beziffert) der Mittel 455 zum Beeinflussen der Steifigkeit des Presswerkzeugteils 401, welche jeweils in der dazugehörigen Kavität 473 bzw. 474 innerhalb des Presswerkzeugteils 401 platziert sind.

Das jeweilige verlagerbare Keilelement 476 kann hierbei durch eine geeignet ausgestaltete, aber nicht weiter gezeigte Hydraulikeinrichtung parallel zu der Pressfläche 422 verschoben werden, so dass ein der Pressfläche 422 zugewandter Wandungsabschnitt 478 (nur exemplarisch beziffert) der jeweiligen Kavität 473 bzw. 474 des Presswerkzeugteils 401 mehr oder weniger stark abgestützt werden kann, wodurch wiederum die Steifigkeit des Presswerkzeugteils 401 verändert werden kann.

An dieser Stelle sei nochmals explizit darauf hingewiesen, dass mit den Mitteln zum Beeinflussen der Steifigkeit natürlich auch die Kontur des Presswerkzeugteils kumulativ oder alternativ verändert werden kann.

Ferner umfasst das in der Figur 6 gezeigte weitere Presswerkzeugteil 501 zwei Niederhalter 580 und 581 zum zusätzlichen Niederhalten des flächigen Halbzeugs 3 (siehe auch Figur 1) in den seitlichen Randbereichen 582 und 583 des Presswerkzeugteils 501, wobei diese Niederhalter 580 und 581 in diesem Ausführungsbeispiel seitlich neben der eigentlichen Pressfläche 522 platziert sind.

Die zwei Niederhalter 580 und 581 bewegen sich hierbei senkrecht zu der Pressfläche 522 und werden parallel zur Pressrichtung 7 aus dem Presswerkzeugteil 501 heraus oder heran gefahren. Die Niederhalter 580 bzw. 581 sind hierbei über eine geeignet ausgestaltete, aber nicht weiter dargestellte Hydraulikeinrichtung ansprechbar.

Bei dem noch in der Figur 7 offenbarten Ausführungsbeispiel weist das Presswerkzeugteil 601 eine Fahreinrichtung 685 umfasst, mittels welcher das Presswerkzeugteil 601 aus einer durch ein in der Vorrichtung 2 (siehe beispielhaft Figur 1) montiertes Presswerkzeug (nicht gezeigt) formulierten Arbeitsposition 686 in eine neben dem Presswerkzeug bzw. der Vorrichtung 2 positionierten Wechselposition 687 hinein verlagert werden kann, um gegen ein anderes Presswerkzeugteil 1, 101, 201, 301, 401, 501 usw. ausgetaucht werden zu können.

Die Fahreinrichtung 685 umfasst hierbei vier Räder 688 (nur exemplarisch beziffert), welche an der Unterseite 620 des Presswerkzeugteils 601 gehaltert sind. Zwischen zwei Räderpaaren (nicht beziffert) ist die Pressfläche 622 angeordnet.

Darüber hinaus umfasst die Fahreinrichtung 685 noch eine Fahrbahntraverse 689, auf welcher die Räder 688 geführt abrollen.

An dieser Stelle sei nochmals explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

### Bezugszeichenliste:

- 1: Presswerkzeugteil
- 2: Vorrichtung
- 3: flächiges Halbzeug
- 4: weiteres Presswerkzeugteil
- 5: Presstisch
- 6: verfahrbarer Pressstößel
- 7: Pressrichtung
- 8: rechtes Ständerelement
- 9: linkes Ständerelement
- 10: Maschinengestell
- 11: Gelenkverbindung
- 12: erster Pressstößelbereich
- 13: zweiter Pressstößelbereich
- 15: Richtpresse
- 20: Unterseite
- 21: Pressflächenbereich
- 22: Pressfläche
- 23: Pressflächenbreite
- 24: Breite
- 25: Materialschwächung
- 26: erste Teilhälfte
- 27: zweite Teilhälfte
- 28: Biegebrückenbereich
- 30: Teilungsebene
- 31: erste Seite
- 32: zweite Seite
- 35: gemeinsamer Aktuator
- 36: geteiltes Tragrahmenteil
- 37: erste Rahmenteilhälfte
- 38: zweite Rahmenteilhälfte
- 39: Bewegungsrichtung
- 40: Hydraulikzylindereinheit
- 41: Zylinderkammer
- 42: Kolbenelement
- 43: Kolbenboden
- 44: Kolbenstange
- 45: Fluid-Anschlusseinrichtung
- 46: Eingangs- und/oder Ausgangsanschluss
- 47: Fluidleitung
- 48: erstes Ende
- 49: zweites Ende
- 50: Kippeinrichtung
- 51: erste weitere Hydraulikzylindereinheit
- 52: zweite weitere Hydraulikzylindereinheit
- 53: Kippachse
- 54: Hydraulikanschlüsse
- 101: alternatives Presswerkzeugteil
- 125: Materialschwächung
- 126: erste Teilhälfte
- 127: zweite Teilhälfte
- 128: elastisch biegbarer Biegebrückenbereich
- 135: Aktuator
- 140: Hydraulikzylindereinheit
- 201: anderes Presswerkzeugteil
- 221: Pressflächenbereich
- 222: Pressfläche
- 223: Pressflächenbreite
- 245A: erste Fluid-Anschlusseinrichtung
- 245B: zweite Fluid-Anschlusseinrichtung
- 255: Mittel zum Beeinflussen der Steifigkeit
- 256: erste Druckkammer
- 257: zweite Druckkammer
- 258: erste Fördereinrichtung
- 259: zweite Fördereinrichtung
- 260: Hydraulikflüssigkeitsreservoir
- 261: Förderpumpe
- 262: Regelventil
- 301: weiteres Presswerkzeugteil
- 345: Fluid-Anschlusseinrichtungen
- 360: Mittel zum Beeinflussen der Steifigkeit
- 364: erste weitere Hydraulikzylindereinheit
- 365: zweite weitere Hydraulikzylindereinheit
- 366: Zylinderkammern
- 367: Kolbenelemente
- 401: Presswerkzeugteil
- 422: Pressfläche
- 460: Mittel zum Beeinflussen der Steifigkeit
- 470: erste Keilmechanikeinheit
- 471: zweite Keilmechanikeinheit
- 473: erste Kavität
- 474: zweite Kavität
- 475: ortsfeste Keilelemente
- 476: verlagerbare Keilelemente
- 477: Keilelementpaare
- 478: Wandungsabschnitte
- 501: Presswerkzeugteil
- 522: Pressfläche
- 580: erster Niederhalter
- 581: zweiter Niederhalter
- 582: erster seitlicher Randbereich bzw. Eckbereich
- 583: zweiter seitlicher Randbereich bzw. Eckbereich
- 601: Presswerkzeugteil
- 620: Unterseite
- 622: Pressfläche
- 685: Fahreinrichtung
- 686: Arbeitsposition
- 687: Wechselposition
- 688: Räder
- 689: Fahrbahntraverse

## Patentansprüche

1. Presswerkzeugteil (1; 101; 201; 301; 401; 501; 601) zum Beseitigen eines Planheitsfehlers an einem flächigen Halbzeug (3) mit einer dem flächigen Halbzeug (3) zugewandten Pressfläche (22, 222; 422; 522; 622), ***dadurch gekennzeichnet, dass*** das Presswerkzeugteil (1; 101; 201; 301; 401; 501; 601) durch eine Materialschwächung (25; 125) voneinander getrennte Teilhälften (26, 27; 126, 127) aufweist, welche einerseits mittels eines elastisch biegbaren Biegebrückenbereichs (28; 128) des Presswerkzeugteils (1; 101; 201; 301; 401; 501; 601) miteinander und andererseits jeweils mit einem gemeinsamen Aktuator (35; 135) wirkverbunden sind, um die Pressfläche (22, 222; 422; 522; 622) des Presswerkzeugteils (1; 101; 201; 301; 401; 501; 601) in Abhängigkeit des Planheitsfehlers elastisch zu verformen.

2. Presswerkzeugteil (1; 101; 201; 301; 401; 501; 601) nach Anspruch 1, ***dadurch gekennzeichnet, dass*** der gemeinsame Aktuator (35; 135) unmittelbar an den Teilhälften (26, 27; 126, 127) befestigt ist.

3. Presswerkzeugteil (1; 101; 201; 301; 401; 501; 601) nach Anspruch 1 oder 2, ***dadurch gekennzeichnet, dass*** die voneinander getrennten Teilhälften (26, 27; 126, 127) mittels des gemeinsamen Aktuators (35; 135) miteinander wirkverbunden sind.

4. Presswerkzeugteil (1; 101; 201; 301; 401; 501; 601) nach einem der Ansprüche 1 bis 3, ***dadurch gekennzeichnet, dass*** der gemeinsame Aktuator (35; 135) von dem Presswerkzeugteil (1; 101; 201; 301; 401; 501; 601) gehaltert bzw. getragen ist.

5. Presswerkzeugteil (1; 101; 201; 301; 401; 501; 601) nach einem der Ansprüche 1 bis 4, ***dadurch gekennzeichnet, dass*** der gemeinsame Aktuator (35; 135) in dem Presswerkzeugteil (1; 101; 201; 301; 401; 501; 601) integriert ist.

6. Presswerkzeugteil (1; 101; 201; 301; 401; 501; 601) nach einem der Ansprüche 1 bis 5, ***dadurch gekennzeichnet, dass*** der gemeinsame Aktuator (35; 135) eine Hydraulikzylindereinheit (40; 140) umfasst.

7. Presswerkzeugteil (1; 101; 201; 301; 401; 501; 601) nach einem der Ansprüche 1 bis 6, ***dadurch gekennzeichnet, dass*** der gemeinsame Aktuator (35; 135) eine Zylinderkammer (41) umfasst, welche durch eine der Teilhälften (26, 27; 126, 127) des Presswerkzeugs (1; 101; 201; 301; 401; 501; 601) ausgestaltet ist.

8. Presswerkzeugteil (1; 101; 201; 301; 401; 501; 601) nach einem der Ansprüche 1 bis 7, ***dadurch gekennzeichnet, dass*** der gemeinsame Aktuator (35; 135) ein Kolbenelement (42) umfasst, wobei ein erstes Ende (48) des Kolbenelements (42) mit der ersten Teilhälfte (26; 126) des Presswerkzeugteils (1; 101; 201; 301; 401; 501; 601) und ein zweites Ende (49) des Kolbenelements (42) mit der zweiten Teilhälfte (27; 127) des Presswerkzeugteils (1; 101; 201; 301; 401; 501; 601) wechselwirkend verbunden sind.

9. Presswerkzeugteil (1; 101; 201; 301; 401; 501; 601) nach einem der Ansprüche 1 bis 8, ***dadurch gekennzeichnet, dass*** der gemeinsame Aktuator (35; 135) mittels des Presswerkzeugteils (1; 101; 201; 301; 401; 501; 601) an einem verfahrbaren Pressstößel (6) einer Vorrichtung (2) zum Beseitigen von Planheitsfehlern an flächigen Halbzeugen (3) oder an einem Presstisch (5) hiervon angeordnet ist.

10. Presswerkzeugteil (1; 101; 201; 301; 401; 501; 601) nach einem der Ansprüche 1 bis 9, ***dadurch gekennzeichnet, dass*** das Presswerkzeugteil (1; 101; 201; 301; 401; 501; 601) eine Fluid-Anschlusseinrichtung (45) zum fluidischen Betreiben des gemeinsamen Aktuators (35; 135) umfasst.

11. Presswerkzeugteil (1; 101; 201; 301; 401; 501; 601) nach einem der Ansprüche 1 bis 10, ***dadurch gekennzeichnet, dass*** das Presswerkzeugteil (1) ein geteiltes Tragrahmenteil (36) umfasst, in welchem der gemeinsame Aktuator (35; 135) integriert ist.

12. Presswerkzeugteil (1; 101; 201; 301; 401; 501; 601) nach einem der Ansprüche 1 bis 11, ***dadurch gekennzeichnet, dass*** das Presswerkzeugteil (1) durch die Materialschwächung (25; 125) in zwei gleich große Teilhälften (26, 27; 126, 127) unterteilt ist.

13. Presswerkzeugteil (1; 101; 201; 301; 401; 501; 601) nach einem der Ansprüche 1 bis 12, ***dadurch gekennzeichnet, dass*** die Materialschwächung (25; 125) sich ausgehend von dem elastisch biegbaren Biegebrückenbereich (28; 128) entlang einer senkrecht zu der Pressfläche (22, 222; 422; 522; 622) verlaufenden Ebene (30) erstreckt.

14. Presswerkzeugteil (1; 101; 201; 301; 401; 501; 601) nach einem der Ansprüche 1 bis 13, ***dadurch gekennzeichnet, dass*** die Teilhälften (26, 27; 126, 127) des Pressenwerkzeugteils (1; 101; 201; 301; 401; 501; 601) beweglich an einem Pressstößel (6) gehaltert sind.

15. Presswerkzeugteil (1; 101; 201; 301; 401; 501; 601) nach einem der Ansprüche 1 bis 14, ***dadurch gekennzeichnet, dass*** das Presswerkzeugteil (1; 101; 201; 301; 401; 501; 601) Mittel (255; 355; 455) zum Beeinflussen der Steifigkeit des Presswerkzeugteils (1; 101; 201; 301; 401; 501; 601) umfasst.

16. Presswerkzeugteil (1; 101; 201; 301; 401; 501; 601) nach Anspruch 15, ***dadurch gekennzeichnet, dass*** die Mittel (255) zum Beeinflussen der Steifigkeit des Presswerkzeugteils (201) wenigstens eine Druckkammer (256, 257) umfassen, welche in dem Pressenwerkzeugteil (201) integriert ist.

17. Presswerkzeugteil (1; 101; 201; 301; 401; 501; 601) nach Anspruch 15 oder 16, ***dadurch gekennzeichnet, dass*** die Mittel (355) zum Beeinflussen der Steifigkeit des Presswerkzeugteils (301) wenigstens eine weitere Hydraulikzylindereinheit (364, 365) umfassen, welche in dem Pressenwerkzeugteil (301) integriert ist.

18. Presswerkzeugteil (1; 101; 201; 301; 401; 501; 601) nach Anspruch 17, ***dadurch gekennzeichnet, dass*** die Mittel (455) zum Beeinflussen der Steifigkeit des Presswerkzeugteils (401) wenigstens eine Keilmechanikeinheit (470, 471) umfassen, welche in dem Pressenwerkzeugteil (401) integriert ist, wobei die Keilmechanikeinheit (470, 471) wenigstens ein relativ gegenüber dem Presswerkzeugteil (401) verlagerbares Keilelement (476) aufweist.

19. Presswerkzeugteil (1; 101; 201; 301; 401; 501; 601) nach einem der Ansprüche 1 bis 18, ***dadurch gekennzeichnet, dass*** das Presswerkzeugteil (501) senkrecht zur Pressfläche (522) translatorisch bewegbare Niederhalter (580, 581) zum Niederhalten des flächigen Halbzeugs (3) umfasst.

20. Presswerkzeugteil (1; 101; 201; 301; 401; 501; 601) nach einem der Ansprüche 1 bis 19, ***dadurch gekennzeichnet, dass*** das Presswerkzeugteil (601) eine Fahreinrichtung (685) umfasst, mittels welcher es aus einer durch ein Presswerkzeug (601) formulierten Arbeitsposition (686) in eine neben dem Presswerkzeug (601) positionierten Wechselposition (687) hinein verlagerbar ist.

21. Presswerkzeugteil (1; 101; 201; 301; 401; 501; 601) nach einem der Ansprüche 1 bis 20, ***dadurch gekennzeichnet, dass*** die Pressfläche (22, 222; 422; 622) des Presswerkzeugteils (1) mittels eines Pressflächenbereichs (21) ausgestaltet ist, welcher eine Pressflächenbreite (23) aufweist, welche größer ist als die Breite (24) des flächigen Halbzeugs (3).

22. Vorrichtung (2) zum Beseitigen von Planheitsfehlern an flächigen Halbzeugen (3), insbesondere Richtpresse (15), mit einem Maschinengestell (10), an welchem ein Pressstößel (6) in Pressrichtung (7) gegenüber einem Presstisch (5) verfahrbar gelagert ist, und mit einem Presswerkzeug umfassend wenigstens ein eine Pressfläche (22, 222; 422; 522; 622) aufweisendes Presswerkzeugteil (1; 101; 201; 301; 401; 501; 601), mittels welchem Planheitsfehler an dem flächigen Halbzeug (3) beseitigbar sind, ***dadurch gekennzeichnet, dass*** die Vorrichtung (2) ein Presswerkzeugteil (1; 101; 201; 301; 401; 501; 601) nach einem der vorstehenden Ansprüche aufweist.

23. Vorrichtung (2) nach Anspruch 22, ***dadurch gekennzeichnet, dass*** die Vorrichtung (2) eine Kippeinrichtung (50) aufweist, mittels welcher ein Presswerkzeugteil (1; 101; 201; 301; 401; 501; 601) um eine zu der Pressfläche (22, 222; 422; 522; 622) parallel verlaufende Kippachse (53) herum kippbar an dem Pressstößel (6) oder an dem Maschinengestell (10) gelagert ist.

24. Vorrichtung (2) nach Anspruch 23, ***dadurch gekennzeichnet, dass*** die Kippeinrichtung (50) wenigstens eine, vorzugsweise zwei, zwischen dem Pressstößel (6) und dem Maschinengestell (10) wirkende Hydraulikzylindereinheit (51, 52) umfasst, um den Pressstößel (6) um die Kippachse (53) herum zu kippen.

## Claims

1. Press tool part (1; 101; 201; 301; 401; 501; 601) for eliminating a planarity fault at a flat semi-finished product (3) with a press surface (22, 222; 422; 522; 622) facing the flat semi-finished product (3), **characterised in that** the press tool part (1; 101; 201; 301; 401; 501; 601) comprises part halves (26, 27; 126, 127), which are separated from one another by a material weakening (25; 125) and which are operatively connected together on the one hand by means of a resiliently bendable bending bridge region (28; 128) of the press tool part (1; 101; 201; 301; 401; 501; 601) and on the other hand respectively by a common actuator (35; 135) so as to resiliently deform the press surface (22, 222; 422; 522; 622) of the press tool part (1; 101; 201; 301; 401; 501; 601) in dependence on the planarity fault.

2. Press tool part (1; 101; 201; 301; 401; 501; 601) according to claim 1, **characterised in that** the common actuator (35; 135) is directly secured to the part halves (26, 27; 126, 127).

3. Press tool part (1; 101; 201; 301; 401; 501; 601) according to claim 1 or 2, **characterised in that** the part halves (26, 27; 126, 127) separated from one another are operatively connected together by means of the common actuator (35; 135).

4. Press tool part (1; 101; 201; 301; 401; 501; 601) according to any one of claims 1 to 3, **characterised in that** the common actuator (35; 135) is held or supported by the press tool part (1; 101; 201; 301; 401; 501; 601).

5. Press tool part (1; 101; 201; 301; 401; 501; 601) according to any one of claims 1 to 4, **characterised in that** the common actuator (35; 135) is integrated in the press tool part (1; 101; 201; 301; 401; 501; 601).

6. Press tool part (1; 101; 201; 301; 401; 501; 601) according to any one of claims 1 to 5, **characterised in that** the common actuator (35; 135) comprises a hydraulic cylinder unit (40; 140).

7. Press tool part (1; 101; 201; 301; 401; 501; 601) according to any one of claims 1 to 6, **characterised in that** the common actuator (35; 135) comprises a cylinder chamber (41) which is formed by one of the part halves (26, 27; 126, 127) of the press tool part (1; 101; 201; 301; 401; 501; 601).

8. Press tool part (1; 101; 201; 301; 401; 501; 601) according to any one of claims 1 to 7, **characterised in that** the common actuator (35; 135) comprises a piston element (42), wherein a first end (48) of the piston element (42) is connected with the first part half (26; 126) of the press tool part (1; 101; 201; 301; 401; 501; 601) and a second end (49) of the piston element (42) reciprocally with the second part half (27; 127) of the press tool part (1; 101; 201; 301; 401; 501; 601).

9. Press tool part (1; 101; 201; 301; 401; 501; 601) according to any one of claims 1 to 8, **characterised in that** the common actuator (35; 135) is arranged by means of the press tool part (1; 101; 201; 301; 401; 501; 601) at a movable press ram (6) of a device (2) for eliminating planarity faults at flat semi-finished products (3) or at a press table (5) thereof.

10. Press tool part (1; 101; 201; 301; 401; 501; 601) according to any one of claims 1 to 9, **characterised in that** the press tool part (1; 101; 201; 301; 401; 501; 601) comprises a fluid connecting device (45) for fluid operation of the common actuator (35; 135).

11. Press tool part (1; 101; 201; 301; 401; 501; 601) according to any one of claims 1 to 10, **characterised in that** the press tool part (1) comprises a divided support frame part (36) in which the common actuator (35; 135) is integrated.

12. Press tool part (1; 101; 201; 301; 401; 501; 601) according to any one of claims 1 to 11, **characterised in that** the press tool part (1) is divided by the material weakening (25; 125) into two equal-size part halves (26, 27; 126, 127).

13. Press tool part (1; 101; 201; 301; 401; 501; 601) according to any one of claims 1 to 12, **characterised in that** the material weakening (25; 125) starting from the resiliently bendable bending bridge region (28; 128) extends along a plane (30) extending perpendicularly to the press surface (22, 222; 422; 522; 622).

14. Press tool part (1; 101; 201; 301; 401; 501; 601) according to any one of claim 1 to 13, **characterised in that** the part halves (26, 27; 126, 127) of the press tool part (1; 101; 201; 301; 401; 501; 601) are movably mounted on a press ram (6).

15. Press tool part (1; 101; 201; 301; 401; 501; 601) according to any one of claims 1 to 14, **characterised in that** the press tool part (1; 101; 201; 301; 401; 501; 601) comprises means (255; 355; 455) for influencing the stiffness of the press tool part (1; 101; 201; 301; 401; 501; 601).

16. Press tool part (1; 101; 201; 301; 401; 501; 601) according to claim 15, **characterised in that** the means (255) for influencing the stiffness of the press tool part (201) comprise at least one pressure chamber (256, 257), which is integrated in the press tool part (201).

17. Press tool part (1; 101; 201; 301; 401; 501; 601) according to claim 15 or 16, **characterised in that** the means (355) for influencing the stiffness of the press tool part (301) comprise at least one further hydraulic cylinder unit (364, 365), which is integrated in the press tool part (301).

18. Press tool part (1; 101; 201; 301; 401; 501; 601) according to claim 17, **characterised in that** the means (455) for influencing the stiffness of the press tool part (401) comprise at least one wedge mechanism (470, 471), which is integrated in the press tool part (401), wherein the wedge mechanism (470, 471) comprises at least one wedge element (476) displaceable relatively with respect to the press tool part (401).

19. Press tool part (1; 101; 201; 301; 401; 501; 601) according to any one of claims 1 to 18, **characterised in that** the press tool part (501) comprises holding-down devices (580, 581), which are translationally movable perpendicularly to the press surface (522), for holding down the flat semi-finished product (3).

20. Press tool part (1; 101; 201; 301; 401; 501; 601) according to any one of claims 1 to 19, **characterised in that** the press tool part (601) comprises a travel device (685) by means of which it is displaceable from a work position (686), which is formulated by a press tool (601), into a change position (687) positioned near the press tool (601).

21. Press tool part (1; 101; 201; 301; 401; 501; 601) according to any one of claims 1 to 20, **characterised in that** the press surface (22, 222; 422; 622) of the press tool part (1) is formed by means of a tool surface region (21) having a press surface width (23) larger than the width (24) of the flat semi-finished product (3).

22. Device (2) for eliminating planarity faults at flat semi-finished products (3), particularly straightening press (15), with a machine frame (10), at which a press ram (6) is mounted to be movable in press direction (7) relative to a press table (5), and with a press tool comprising at least one press tool part (1; 101; 201; 301; 401; 501; 601), which has a press surface (22, 222; 422; 522; 622) and by means of which planarity faults at the flat semi-finished product (3) can be eliminated, **characterised in that** the device (2) comprises a press tool part (1; 101; 201; 301; 401; 501; 601) according to any one of the preceding claims.

23. Device (2) according to claim 22, **characterised in that** the device (2) comprises a tilting device (50) by means of which a press tool part (1; 101; 201; 301; 401; 501; 601) is mounted on the press ram (6) or the machine frame (10) to be tiltable about a tilt axis (53) extending parallelly to the press surface (22, 222; 422; 522; 622).

24. Device (2) according to claim 23, **characterised in that** the tilting device (50) comprises at least one hydraulic cylinder unit (51, 52), preferably two hydraulic cylinder units (51, 52), acting between the press ram (6) and the machine frame (10) so as to tilt the press ram (6) about the tilt axis (53).

## Revendications

1. Partie d'un outil de compression (1 ; 101 ; 201 ; 301 ; 401 ; 501 ; 601) destinée à supprimer un défaut de planéité d'un produit semi-fini de forme plate (3), qui comprend une surface de compression (22, 222 ; 422 ; 522 ; 622) tournée vers le produit semi-fini de forme plate (3), **caractérisée en ce que** la partie de l'outil de compression (1 ; 101 ; 201 ; 301 ; 401 ; 501 ; 601) présente des moitiés de partie (26, 27 ; 126, 127) séparées les unes des autres par l'intermédiaire d'un affaiblissement de matière (25; 125), moitiés qui sont reliées de manière fonctionnelle d'une part les unes aux autres au moyen d'une zone de pliage formant pont (28; 128) de la partie de l'outil de compression (1 ; 101 ; 201 ; 301 ; 401 ; 501 ; 601), qui manifeste une flexibilité de type élastique, et d'autre part, de manière respective, à un actionneur commun (35 ; 135), dans le but de soumettre la surface de compression (22, 222; 422; 522; 622) de la partie de l'outil de compression (1 ; 101 ; 201 ; 301 ; 401 ; 501 ; 601) à une déformation de type élastique en fonction du défaut de planéité.

2. Partie d'un outil de compression (1 ; 101 ; 201 ; 301 ; 401 ; 501 ; 601) selon la revendication 1, **caractérisée en ce que** l'actionneur commun (35; 135) est fixé de manière directe aux moitiés de partie (26, 27; 126, 127).

3. Partie d'un outil de compression (1 ; 101 ; 201 ; 301 ; 401 ; 501 ; 601) selon la revendication 1 ou 2, **caractérisée en ce que** les moitiés de partie séparées les unes des autres (26, 27 ; 126, 127) sont reliées les unes aux autres de manière fonctionnelle au moyen de l'actionneur commun (35 ; 135).

4. Partie d'un outil de compression (1 ; 101 ; 201 ; 301 ; 401 ; 501 ; 601) selon l'une quelconque des revendications 1 à 3, **caractérisée en ce que** l'actionneur commun (35; 135) est maintenu, respectivement est supporté par la partie de l'outil de compression (1 ; 101 ; 201 ; 301 ; 401 ; 501 ; 601).

5. Partie d'un outil de compression (1 ; 101 ; 201 ; 301 ; 401 ; 501 ; 601) selon l'une quelconque des revendications 1 à 4, **caractérisée en ce que** l'actionneur commun (35 ; 135) est intégré dans la partie de l'outil de compression (1 ; 101 ; 201 ; 301 ; 401 ; 501 ; 601).

6. Partie d'un outil de compression (1 ; 101 ; 201 ; 301 ; 401 ; 501 ; 601) selon l'une quelconque des revendications 1 à 5, **caractérisée en ce que** l'actionneur commun (35 ; 135) comprend une unité sous la forme d'un cylindre hydraulique (40; 140).

7. Partie d'un outil de compression (1 ; 101 ; 201 ; 301 ; 401 ; 501 ; 601) selon l'une quelconque des revendications 1 à 6, **caractérisée en ce que** l'actionneur commun (35 ; 135) comprend une chambre faisant office de cylindre (41) qui est réalisée par l'intermédiaire d'une des moitiés de partie (26, 27; 126, 127) de la partie de l'outil de compression (1; 101; 201; 301; 401; 501; 601).

8. Partie d'un outil de compression (1 ; 101 ; 201 ; 301 ; 401 ; 501 ; 601) selon l'une quelconque des revendications 1 à 7, **caractérisée en ce que** l'actionneur commun (35 ; 135) comprend un élément (42) faisant office de piston ; dans laquelle une première extrémité (48) de l'élément faisant office de piston (42) de la partie de l'outil de compression (1 ; 101 ; 201 ; 301 ; 401 ; 501 ; 601) et une deuxième extrémité (49) de l'élément faisant office de piston (42) sont reliées en interaction, la première à la première moitié de partie (26; 16) de la partie de l'outil de compression (1 ; 101 ; 201 ; 301 ; 401 ; 501 ; 601) et la deuxième à la deuxième moitié de partie (27; 127) de la partie de l'outil de compression (1; 101; 201; 301; 401; 501; 601).

9. Partie d'un outil de compression (1 ; 101 ; 201 ; 301 ; 401 ; 501 ; 601) selon l'une quelconque des revendications 1 à 8, **caractérisée en ce que** l'actionneur commun (35 ; 135) est disposé, au moyen de la partie de l'outil de compression (1; 101; 201; 301 ; 401 ; 501 ; 601) contre un coulisseau de compression (6) d'un dispositif (2), apte à se déplacer, qui est destiné à supprimer des défauts de planéité sur des produits semi-finis (3) de forme plate ou contre une table de compression (5) du dispositif en question.

10. Partie d'un outil de compression (1 ; 101 ; 201 ; 301 ; 401 ; 501 ; 601) selon l'une quelconque des revendications 1 à 9, **caractérisée en ce que** la partie de l'outil de compression (1 ; 101 ; 201 ; 301 ; 401 ; 501 ; 601) comprend un mécanisme de raccordement à un fluide (45) pour une exploitation de l'actionneur commun (35; 135) à l'aide d'un fluide.

11. Partie d'un outil de compression (1 ; 101 ; 201 ; 301 ; 401 ; 501 ; 601) selon l'une quelconque des revendications 1 à 10, **caractérisée en ce que** la partie de l'outil de compression (1) comprend un élément en plusieurs parties (36) faisant office de cadre de support, dans lequel est intégré l'actionneur commun (35 ;135).

12. Partie d'un outil de compression (1 ; 101 ; 201 ; 301 ; 401 ; 501 ; 601) selon l'une quelconque des revendications 1 à 11, **caractérisée en ce que** la partie de l'outil de compression (1) est subdivisée en deux moitiés de partie (26, 27; 16, 127) de grandeurs égales par l'intermédiaire de l'affaiblissement de matière (25; 125).

13. Partie d'un outil de compression (1 ; 101 ; 201; 301; 401; 501 ; 601) selon l'une quelconque des revendications 1 à 12, **caractérisée en ce que** l'affaiblissement de matière (25; 125) s'étend à partir de la zone de pliage formant pont (28 ; 128), qui manifeste une flexibilité de type élastique, le long d'un plan (30) qui s'étend en direction perpendiculaire par rapport à la surface de compression (22, 222 ; 422 ; 522 ; 622).

14. Partie d'un outil de compression (1 ; 101 ; 201 ; 301 ; 401 ; 501 ; 601) selon l'une quelconque des revendications 1 à 13, **caractérisée en ce que** les moitiés de partie (26, 27 ; 16, 127) de la partie de l'outil de compression (1 ; 101 ; 201 ; 301 ; 401 ; 501 ; 601) sont maintenues en mobilité contre un coulisseau de compression (6).

15. Partie d'un outil de compression (1 ; 101 ; 201 ; 301 ; 401 ; 501 ; 601) selon l'une quelconque des revendications 1 à 14, **caractérisée en ce que** la partie de l'outil de compression (1 ; 101 ; 201 ; 301 ; 401 ; 501 ; 601) comprend des moyens (255; 355; 455) qui sont destinés à influencer la rigidité de la partie de l'outil de compression (1 ; 101 ; 201 ; 301 ; 401 ; 501 ; 601).

16. Partie d'un outil de compression (1 ; 101 ; 201; 301; 401; 501 ; 601) selon la revendication 15, **caractérisée en ce que** les moyens (255) qui sont destinés à influencer la rigidité de la partie de l'outil de compression (201) comprennent au moins une chambre de pression (256, 257) qui est intégrée dans la partie de l'outil de compression (201).

17. Partie d'un outil de compression (1 ; 101 ; 201 ; 301 ; 401 ; 501 ; 601) selon la revendication 15 ou 16, **caractérisée en ce que** les moyens (355) qui sont destinés à influencer la rigidité de la partie de l'outil de compression (301) comprennent au moins une unité supplémentaire sous la forme d'un cylindre hydraulique (364, 365) qui est intégrée dans la partie de l'outil de compression (301).

18. Partie d'un outil de compression (1 ; 101 ; 201; 301; 401; 501 ; 601) selon la revendication 17, **caractérisée en ce que** les moyens (455) qui sont destinés à influencer la rigidité de la partie de l'outil de compression (401) comprennent au moins une unité faisant office de mécanisme sous la forme d'une clavette (470, 471) qui est intégrée dans la partie de l'outil de compression (401) ; dans laquelle l'unité faisant office de mécanisme sous la forme d'une clavette (470, 471) présente au moins un élément (476) sous la forme d'une clavette qui peut se déplacer par rapport à la partie de l'outil de compression (401).

19. Partie d'un outil de compression (1 ; 101 ; 201; 301; 401; 501 ; 601) selon l'une quelconque des revendications 1 à 18, **caractérisée en ce que** la partie de l'outil de compression (501) comprend des serre-flans (580, 581) qui sont destinés au maintien du produit semi-fini de forme plate (3), qui sont mobiles en exécutant un mouvement de translation en direction perpendiculaire par rapport à la surface de compression (522).

20. Partie d'un outil de compression (1 ; 101; 201; 301; 401; 501 ; 601) selon l'une quelconque des revendications 1 à 19, **caractérisée en ce que** la partie de l'outil de compression (601) comprend un mécanisme de déplacement (685) au moyen duquel elle peut être déplacée à partir d'une position de travail (686) formulée par un outil de compression (601) pour prendre une position d'échange (687) disposée à côté de l'outil de compression (601).

21. Partie d'un outil de compression (1 ; 101 ; 201 ; 301 ; 401 ; 501 ; 601) selon l'une quelconque des revendications 1 à 20, **caractérisée en ce que** la surface de compression (22, 222 ; 422 ; 622) de la partie de l'outil de compression (1) est réalisée au moyen d'une zone (21) sous la forme d'une surface de compression, qui présente une largeur de surface de compression (23) qui est supérieure à la largeur (24) du produit semi-fini de forme plate (3).

22. Dispositif (2) destiné à éliminer des défauts de planéité sur des produits semi-finis de forme plate (3), en particulier presse de dressage (15) qui comprend un bâti de machine (10) contre lequel est monté un coulisseau de compression (6) qui peut être déplacé dans la direction de compression (7) par rapport à une table de compression (5), et qui comprend un outil de compression comprenant au moins une partie d'un outil de compression (1 ; 101 ; 201 ; 301 ; 401 ; 501 ; 601) présentant une surface de compression (22, 222; 422; 522; 622), partie au moyen de laquelle on peut éliminer des défauts de planéité sur le produit semi-fini de forme plate (3), **caractérisé en ce que** le dispositif (2) présente une partie d'un outil de compression (1 ; 101 ; 201 ; 301 ; 401 ; 501 ; 601) selon l'une quelconque des revendications précédentes.

23. Dispositif (2) selon la revendication 22, **caractérisé en ce que** le dispositif (2) présente un mécanisme de basculement (50) au moyen duquel est montée une partie d'un outil de compression (1 ; 101 ; 201 ; 301 ; 401 ; 501 ; 601) contre le coulisseau de compression (6) ou contre le bâti de machine (10) de manière à pouvoir basculer autour d'un axe de basculement (53) qui s'étend parallèlement à la surface de compression (22, 222; 422; 522; 622).

24. Dispositif (2) selon la revendication 23, **caractérisé en ce que** le mécanisme de basculement (50) comprend au moins une, de préférence deux unités (51, 52) faisant office de cylindre(s) hydraulique(s) qui déploient leur activité entre le coulisseau de compression (6) et le bâti de machine (10), dans le but de basculer le coulisseau de compression (6) autour de l'axe de basculement (53).
